# EUROPÄISCHE PATENTSCHRIFT

(11) **EP 2 504 563 B1**
(45) Veröffentlichungstag und Bekanntmachung des Hinweises auf die Patenterteilung: **06.11.2013**
(21) Anmeldenummer: 10779795.3
(22) Anmeldetag: 17.11.2010
(51) Int. Cl.: F02N 15/06, F16N 15/02

(54) **GERÄUSCHOPTIMIERTE STARTVORRICHTUNG**
DISPOSITIF DE DÉMARRAGE OPTIMISÉ EN TERME DE BRUIT
DISPOSITIF DE DÉMARRAGE OPTIMISÉ EN TERME DE BRUIT

(30) Priorität: 23.11.2009 DE 102009046988
(43) Veröffentlichungstag der Anmeldung: 03.10.2012
(73) Patentinhaber: Robert Bosch GmbH, 70442 Stuttgart (DE)
(72) Erfinder: DORNHOEFER, Gerd, 71229 Leonberg (DE)
(86) Internationale Anmeldenummer: PCT/EP2010/067617
(87) Internationale Veröffentlichungsnummer: WO 2011/061201

(56) Entgegenhaltungen:
- EP-A1- 0 497 348
- DE-A1- 2 309 949
- DE-A1- 19 625 892
- DE-U1- 20 010 377

## Beschreibung

### Stand der Technik

Die zunehmende Verbreitung von Start-Stopp-Systemen in Kraftfahrzeugen erfordert eine erweiterte Anforderung an das Startsystem und damit auch eine Funktionalität in Erweiterung bisher eingesetzter Startvorrichtungen. Hierbei sind z.B. schärfere Akustikanforderungen zu nennen, sowie die Notwendigkeit, bei einem Anfahrwunsch des Fahrers jederzeit wieder starten zu können ("Mind-Change"-Funktionalität). Insbesondere beim Auslaufen der Verbrennungskraftmaschine ist dies mit dem klassischen Prinzip der bisher eingesetzten Starter nicht möglich.

DE 101 24 506 A1 bezieht sich auf einen Starter für ein Kraftfahrzeug. Der Starter umfasst ein Gehäuse, ein parallel dazu angeordnetes, einen Magnetschalter enthaltendes Einrückrelais, einen in einem Übergangsbereich zwischen Hohlgehäuse und Einrückrelais drehbar gelagerten Einrückhebel für die Ankopplung des Startermotors an der Verbrennungskraftmaschine. Es ist eine Dichtung gegen Eindringen von Verunreinigungen und Feuchtigkeit in das Einrückrelais vorgesehen. Die Dichtung ist durch eine mit den Gehäusewänden verbundene Gummimembran innerhalb des Übergangsbereiches zwischen dem Gehäuse und dem Einrückrelais gebildet.

DE 10 2009 026 593.7 bezieht sich auf ein Verfahren zur mechanischen Synchronisation zweier sich drehender achsversetzter Stirnzahnräder sowie auf eine Maschine, insbesondere eine elektrische Startvorrichtung. Diese umfasst ein Stirnzahnrad, insbesondere ausgebildet als Andrehritzel, welches mit einer Mitnehmerscheibe zusammenwirkt, die an einer axialen Seite des Stirnzahnrades angeordnet ist. Diese ist einem Hubmittel des Stirnzahnrades abgewandt, wobei die Mitnehmerscheibe gegenüber dem Stirnzahnrad beschränkt drehbar ist. Dadurch werden Zahnlücken des Stirnzahnrades verschlossen.

DE 20010377 U1 bezieht sich auf eine Startvorrichtung, die einen Ritzel aufweist, der in einen mit der Schwungrad eines Verbrennungsmotors verbundenen Zahnkranz eingreift. Der Zahnkrans ist im Bereich der Verzahnung mit Festschmierstoffschicht versehen.

Während bisher eingesetzte Startvorrichtungen an Kraftfahrzeugen ca. 40000 Anlassvorgänge und die dazu benötigten Betriebszyklen durchlaufen, besteht bei heutigen Start/Stopp-Modi (SSM-Funktionalität) das Erfordernis, dass zur Einsparung von Kraftstoff bei längeren Wartephasen, so z.B. geschlossenen Bahnübergängen, bei längeren Rotphasen oder im Stau, die Verbrennungskraftmaschine abgeschaltet werden kann. Dies wird bei heutigen Kraftfahrzeugen zunehmend durch die SSM-Fuktionalität ermöglicht. Dies bedeutet für die zum Starten der Verbrennungskraftmaschine bisher eingesetzten Startvorrichtungen eine erheblich erhöhte Betätigungsfrequenz, so dass diese derart ausgelegt sein müssen, bis zu einer halben Million und mehr Startvorgänge der Verbrennungskraftmaschine zu gewährleisten. Dies stellt einerseits hohe Anforderungen an die Lebensdauer und Zuverlässigkeit der Startvorrichtungen und andererseits bei einer derart hohen Anzahl von Startvorgängen die Anforderung einer Minimierung des auftretenden Geräusches. Es hat sich herausgestellt, dass die Startvorrichtung eine erhebliche Geräuschquelle darstellt, was bei deren Einsatz in Personenfahrzeugen der Oberklasse durch die Insassen und durch die Kraftfahrzeughersteller nicht mehr toleriert wird, so dass Abhilfe zu schaffen ist.

Üblicherweise wird der Startvorgang einer Verbrennungskraftmaschine dadurch eingeleitet, dass die Verbrennungskraftmaschine durchgedreht wird, dadurch eine Kompression eines geeigneten Gas-Luft-Gemisches erzeugt wird und dann nach Zündung des Gemisches selbstständig läuft. Dazu werden in der Regel elektrisch angetriebene Startvorrichtungen eingesetzt. Deren Ritzel wird auf den Zahnkranz der Verbrennungskraftmaschine geführt und treibt diesen dann an. Dabei kann es vorkommen, dass das Ritzel nicht optimal auf den Zahnkranz einspurt, sondern dabei die Ritzelverzahnung nicht auf eine Lücke zwischen zwei Zähnen des Zahnkranzes trifft, sondern es trifft Zahn auf Zahn, was das Einspuren verhindert. Dazwischen können Grenzfälle auftreten, wo z.B. der Zahn nur halbseitig auf die Verzahnung des Zahnkranzes trifft. Die Geräuschentwicklung ist bei nicht korrektem Einspuren beträchtlich.

JP 04 168 947 A bezieht sich auf eine Startvorrichtung. Gemäß dieser lösung wird eine Komponente gegen adhüsiven Verschleiß und zur Dämpfung des auftretenden Geräusches bei metallischem Kontakt mit einem Festschmierstoff versehen, der auf Ritzelverzahnung aufgebracht wird.

### Offenbarung der Erfindung

Der erfindungsgemäß vorgeschlagenen Lösung folgend, wird mit geringstmöglichem Zusatzaufwand, ohne dass konstruktive Veränderungen an bestehenden Systemen vorzunehmen wären, eine Funktionsverbesserung hinsichtlich des Einspurens erreicht. Aufgrund einer verminderten Reibung wird das beim Einspuren auftretende Geräusch zumindest reduziert, wenn nicht vollständig unterdrückt, indem zur Verringerung der Reibung eine Trockenschmierung eingesetzt wird. In einer vorteilhaften Ausführungsvariante des der Erfindung zugrunde liegenden Gedankens wird das in den Zahnkranz der Verbrennungskraftmaschine einzuspurende Ritzel sowohl innerhalb der Verzahnung, bei der es sich in der Regel um eine Außenschrägverzahnung handelt, als auch stirnseitig mit einer Festschmierstoffschicht versehen. Die Festschmierstoffschicht wird mittels eines geeigneten Bindersystems an der Oberfläche des Einspurritzels gebunden, so z.B. Polyamidimid, Epoxid und dergleichen. Als Festschmierstoffe kommen Stoffe in Betracht, die spezifisch hohen auftretenden Flächenpressungen widerstehen können, wie sie innerhalb von aufeinander abrollenden Evolventenzahnflanken auftreten, so z.B. MoS₂ und Graphit. Gegebenenfalls kann den genannten Festschmierstoffen ein Additiv wie z.B. Ptfe, was die Haftreibung vermindert, beigemischt sein. Bevorzugt werden die Festschmierstoffe im Rahmen einer Gleitlackschicht aufgetragen, die sich zwar im Laufe der Betriebszeit abnutzt, wodurch jedoch dann idealglatt eingelaufene Oberflächen entstehen. Durch diese Lösung kann insbesondere ein adhäsiver Verschleiß, der die Oberflächen ansonsten zerrütten würde, vermieden werden.

Alternativ besteht die Möglichkeit, auch den Zahnkranz der Verbrennungskraftmaschine mit einem Festschmierstoff zu versehen.

### Kurze Beschreibung der Zeichnung

Anhand der Zeichnung wird die Erfindung nachstehend eingehender beschrieben.

Es zeigt:
- Figur 1: eine Schnittdarstellung einer elektrischen Maschine, insbesondere einer Startvorrichtung, samt Einrückrelais, Andrehritzel und Einrückmimik,
- Figur 2: eine schematische Querschnittsansicht einer auf einer Antriebswelle gelagerten Ritzelwelle in einer ersten Ausführungsvariante und
- Figur 3: eine schematische Querschnittsansicht einer Ritzelwelle gemäß einer zweiten Ausführungsform.

### Ausführungsvarianten

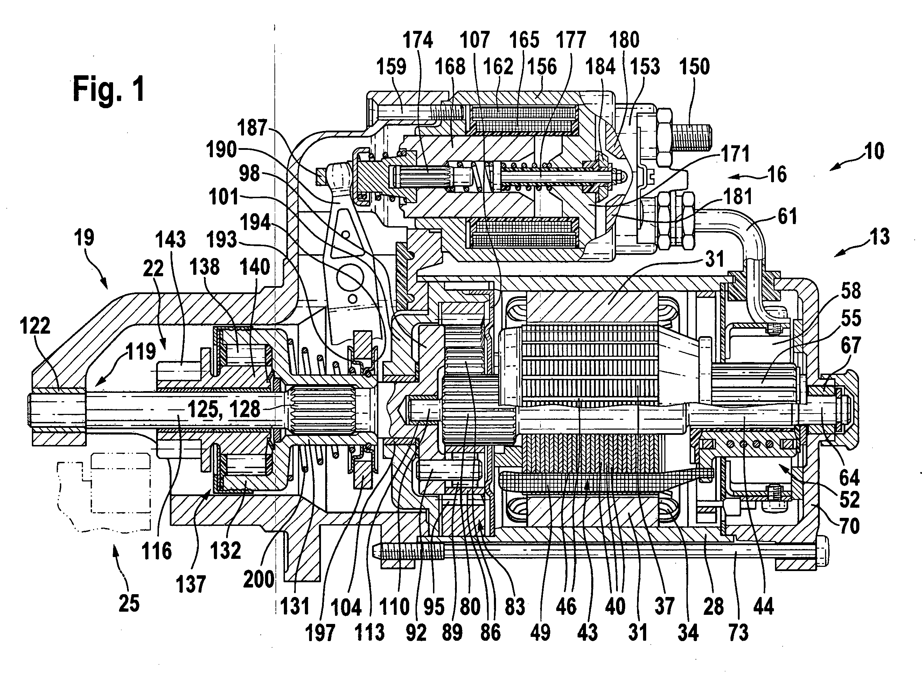

Figur 1 zeigt eine Startvorrichtung in einem Längsschnitt. Eine Startvorrichtung 10 ist mit einem Andrehritzel versehen, welches noch von einem Teil des Gehäuses der Startvorrichtung umgeben ist. Die nachfolgenden Ausführungen gelten ebenso für eine frei ausstoßende Startvorrichtung, d.h. für eine Startvorrichtung, bei der das Andrehritzel nach Betätigung des Einrückrelais an seinem Umfang vollständig freiliegt.

Die in Figur 1 dargestellte Startvorrichtung 10 weist beispielsweise einen Startermotor 13 und ein Einrückrelais 16 auf. Der Startermotor 13 und das Einrückrelais 16 sind an einem gemeinsamen Antriebslagerschild 19 befestigt. Der Startermotor 13 dient dazu, ein Andrehritzel 22 anzutreiben, wenn es im Zahnkranz der hier nicht dargestellten Verbrennungskraftmaschine eingespurt ist.

Der Startermotor 13 weist als Gehäuse ein Polrohr 28 auf, das an seinem Innenumfang Polschuhe 31 trägt, die jeweils von einer Erregerwicklung 34 umwickelt sind. Die Polschuhe 31 umgeben wiederum einen Anker 37, der ein aus Lamellen 40 aufgebautes Ankerpaket 43 und eine in Nuten 46 angeordnete Ankerwicklung 49 aufweist. Das Ankerpaket 43 ist auf einer Antriebswelle 44 aufgepresst. An dem dem Andrehritzel 22 abgewandten Ende der Antriebswelle 44 ist des Weiteren ein Kommutator 52 angebracht, der unter anderem aus einzelnen Kommutatorlamellen 55 aufgebaut ist. Die Kommutatorlamellen 55 sind in bekannter Weise mit der Ankerwicklung 49 derart elektrisch verbunden, dass sich bei Bestromung der Kommutatorlamellen 55 durch Kohlebürsten 58 eine Drehbewegung des Ankers 37 im Polrohr 38 ergibt. Eine zwischen dem Einrückrelais 16 und dem Startermotor 13 angeordnete Stromzuführung 61 versorgt im Einschaltzustand sowohl die Kohlebürsten 58 als auch die Erregerwicklung 34 mit Strom. Die Antriebswelle 44 ist kommutatorseitig mit einem Wellenzapfen 64 in einem Gleitlager 67 abgestützt, welches wiederum in einem Kommutatorlagerdeckel 70 ortsfest gehalten ist. Der Kommutatorlagerdeckel 70 wiederum wird mittels Zugankern 43, die über den Umfang des Polrohrs 28 verteilt angeordnet sind (Schrauben, so z.B. zwei, drei oder vier Stück), im Antriebslagerschild 19 befestigt. Es stützt sich dabei das Polrohr 28 am Antriebslagerschild 19 ab und der Kommutatorlagerdeckel 70 am Polrohr 28.

In Antriebsrichtung gesehen schließt sich an den Anker 37 ein Sonnenrad 80 an, welches Teil eines Planetengetriebes 83 ist. Das Sonnenrad 80 ist von mehreren Planetenrädern 86 umgeben, üblicherweise drei Planetenräder 86, die mittels Wälzlagern 89 auf Achszapfen 92 abgestützt sind. Die Planetenräder 86 wälzen in einem Hohlrad 95 ab, das im Polrohr 28 außenseitig gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101 und einem darin angeordneten Gleitlager 104 gelagert. Das Zwischenlager 101 ist derartig topfförmig gestaltet, dass in diesem sowohl der Planetenträger 98 als auch die Planetenräder 86 aufgenommen sind. Des Weiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polrohrs 28 ab. Der Anker 37 weist auf dem vom Kommutator 52 abgewandten Ende der Antriebswelle 44 einen weiteren Wellenzapfen 110 auf, der ebenfalls in einem Gleitlager 116 aufgenommen ist. Das Gleitlager 113 ist in einer zentralen Bohrung des Planetenträgers 98 aufgenommen. Der Planetenträger 98 ist einstückig mit der Abtriebswelle 116 verbunden. Die Abtriebswelle 116 ist mit ihrem vom Zwischenlager 101 abgewandten Ende 119 in einem weiteren Lager 122 des antriebsseitigen Lagers (A-Lager) abgestützt. Die Abtriebswelle 116 ist in verschiedene Abschnitte aufgeteilt: So folgt dem Abschnitt, der im Gleitlager 104 des Zwischenlagers 101 angeordnet ist, ein Abschnitt mit einer Geradverzahnung 125 (Innenverzahnung), die Teil einer Welle-Nabe-Verbindung ist. Die Welle-Nabe-Verbindung 128 ermöglicht in diesem Falle das axiale geradlinige Gleiten eines Mitnehmers 131. Der Mitnehmer 131 ist ein hülsenartiger Fortsatz, der einstückig mit einem topfförmigen Außenring 132 des Freilaufs 137 ist. Der Freilauf 137, der z.B. als Richtgesperre ausgebildet sein kann, besteht des Weiteren aus einem Innenring 140, der radial innerhalb des Außenringes 132 angeordnet ist. Zwischen dem Innenring 140 und dem Außenring 132 sind die Klemmkörper 138 angeordnet. Die Klemmkörper 138 verhindern in Zusammenwirkung mit dem Innen- und dem Außenring eine Relativdrehung zwischen dem Außenring und dem Innenring in einer zweiten Richtung. Der Freilauf 137 ermöglicht somit eine Relativbewegung zwischen Innenring 140 und Außenring 132 nur in eine Richtung. In diesem Ausführungsbeispiel ist der Innenring 140 einstückig mit dem Andrehritzel 22 und dessen Schrägverzahnung 143, die als Außenschrägverzahnung ausgebildet ist, ausgeführt.

Der Vollständigkeit halber sei nachfolgend noch auf den Einspurmechanismus eingegangen. Das Einrückrelais 16 weist einen Bolzen 150 auf, der ein elektrischer Kontakt ist und der an dem Pluspol einer elektrischen Starterbatterie, die hier nicht dargestellt ist, angeschlossen ist. Der Bolzen 150 ist durch einen Relaisdeckel 53 hindurchgeführt. Der Relaisdeckel 153 schließt ein Relaisgehäuse 156 ab, das mittels mehrerer Befestigungselemente 159, beispielsweise Schrauben, am Antriebslagerschild 19 befestigt ist. Im Einrückrelais 16 ist weiterhin eine Einzugswicklung 162 und eine Haltewicklung 165 angeordnet. Die Einzugswicklung 162 und die Haltewicklung 165 bewirken beide jeweils im eingeschalteten Zustand ein elektromagnetisches Feld, welches sowohl das Relaisgehäuse 156 (aus elektromagnetisch leitfähigem Material hergestellt), einen linear beweglichen Anker 168 und einen Ankerrückschluss 171 durchströmt. Der Anker 168 trägt eine Schubstange 174, die beim linearen Einzug des Ankers 168 in Richtung auf einen Schaltbolzen 177 hin bewegt wird. Mit dieser Bewegung der Schubstange 174 zum Schaltbolzen 177 wird dieser aus seiner Ruhelage in Richtung zu zwei Kontakten 180, 181 bewegt, so dass eine am zu den Kontakten 180 und 181 am Ende des Schaltbolzens 177 angebrachte Kontaktbrücke 184 beide Kontakte 180 und 181 elektrisch miteinander verbindet. Dadurch wird vom Bolzen 150 elektrische Leistung über die Kontaktbrücke 184 hinweg zur Stromzuführung 61 und damit zu den Kohlebürsten 58 geführt. Der Startermotor 13 wird dabei bestromt.

Das Einrückrelais 16 bzw. der Anker 168 hat darüber hinaus auch die Aufgabe, mit einem Zugelement 187 einen im Antriebslagerschild 19 drehbeweglich angeordneten Hebel zu bewegen. Der Hebel 190, üblicherweise als Gabelhebel ausgeführt, umgreift mit zwei hier nicht dargestellten "Zinken" an ihrem Außenumfang zwei Scheiben 193 und 194, um einen zwischen diesen eingeklemmten Mitnehmerring 194 zum Freilauf 137 hin und gegen den Widerstand der Feder 200 zu bewegen und dadurch das Andrehritzel 22 in den Zahnkranz 25 der in Figur 1 nicht dargestellten Verbrennungskraftmaschine einzuspuren.

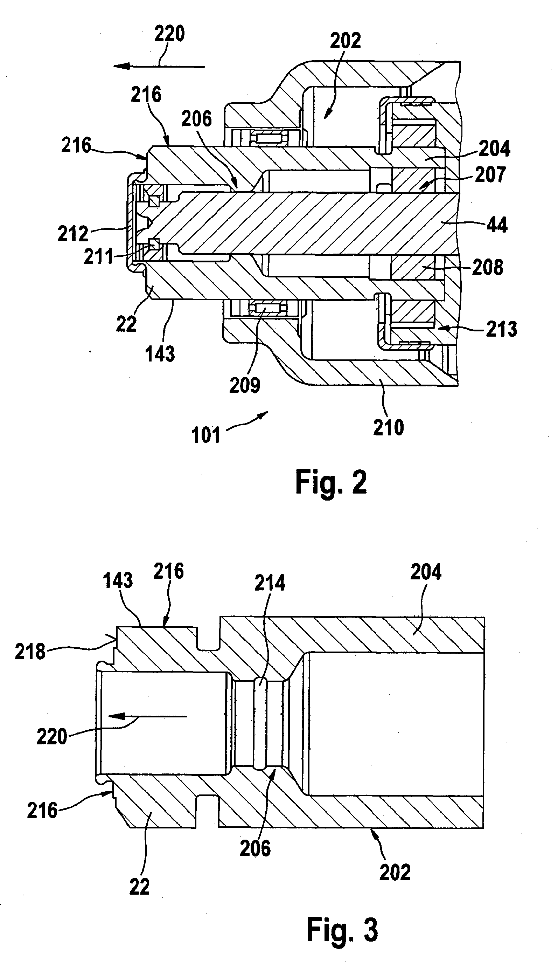

Der Darstellung gemäß Figur 2 ist ein Ausschnitt in einem vergrößerten Querschnitt einer Startvorrichtung 10 zum Andrehen einer Verbrennungskraftmaschine in einem Fahrzeug zu entnehmen.

Die Startvorrichtung 10 ist vom Typ eines frei ausstoßenden Starters mit einer einseitig gelagerten Ritzelwelle 202, auf der ein Andrehritzel 22 ausgebildet ist, das in einem nicht dargestellten Zahnkranz mittels eines Relais für einen Startvorgang der Brennkraftmaschine eingespurt wird und nach dem Hochfahren der Brennkraftmaschine wieder aus dem Zahnkranz ausgerückt wird.

Die Ritzelwelle 202 ist auf einer Antriebswelle 44 der Startvorrichtung 10 drehbar gelagert, um eine Relativdrehzahl zuzulassen, die auftritt, wenn die Verbrennungskraftmaschine hochläuft und eine höhere Drehzahl am Zahnkranz erreicht ist als der Starter über die Antriebswelle 44 vorgegeben hat. Diese Relativdrehzahl hat eine sehr kurze Betriebszeit im Startzyklus, insbesondere in modernen Fahrzeugen mit einem Startknopf ist die Betriebszeit definiert verkürzt, da eine Startzeitsteuerung das Andrehritzel 22 aus dem Eingriff mit dem Zahnkranz nach dem Start der Verbrennungskraftmaschine nimmt.

Die Ritzelwelle 202 weist einen ersten Lagerabschnitt 206 und einen zweiten Lagerabschnitt 207 auf. Der erste Lagerabschnitt 206 ist ein äußerer, der dem Andrehritzel 22 am nächsten liegt, während der zweite Lagerabschnitt 207 ein innerer ist, mit einer Lagerhülse 208, die aus einem weichen Material, wie beispielsweise einem gesinterten Bronzematerial, hergestellt ist. Die Lagerhülse 208 ist zur Verbesserung der Gleiteigenschaften und als Korrosionsschutz sowie zur Geräuschreduktion mit einem Schmierstoff umgeben bzw. mit diesem getränkt. Die Lagerhülse 208 kann auch ein Schmierstoffdepot in Form einer umlaufenden Nut, einer so genannten Tasche, aufweisen. Um einen großen Innendurchmesser der Ritzelwelle 202 zu überbrücken, ist bei dieser Ausführungsform bevorzugt die Lagerhülse 208 im Querschnitt gesehen dick mit einer großen Wandmaterialstärke ausgebildet.

Die Ritzelwelle 202 lagert am ersten Lagerabschnitt 206 direkt, ohne eine Sinterhülse oder ein dazwischengeschaltetes Wälzlager auf der Antriebswelle 44. Es liegt somit eine Hart-Hart-Lagerung vor, da der harte Werkstoff der Ritzelwelle 202 auf dem harten Werkstoff der Antriebswelle 44 lagert. Eine solche Lagerung ist ausreichend, da die Lebensdauer gegenüber herkömmlichen Wälzlagern von mehreren tausend Stunden und Lagerungen in einer Hülse insgesamt sehr kurz ist. Die Gesamtbetriebsdauer der Hart-Hart-Lagerung beträgt typischerweise 10 bis 12 Stunden über die Lebensdauer der Startvorrichtung 10 betrachtet. Diese Betriebszeit fällt beim Auftreten einer Relativdrehzahl zwischen der Ritzelwelle 202 und der Antriebswelle 44 an.

Die Ritzelwelle 202 ist von einem Wälzlager 209 aufgenommen, welches in einem Lagerschild 210 der Startvorrichtung 10 eingesetzt ist. Um die Hart-Hart-Lagerung gegenüber Umwelteinflüssen wie Staub, Feuchtigkeit und Abrieb zu schützen, schließt eine Dichtkappe 212 an der Stirnseite des Andrehritzels 22 die Lagerung insgesamt ab. Die axiale Einspurbewegung des Andrehritzels 22 wird durch einen Ritzelanschlag 211 auf der Antriebswelle 44 begrenzt. Der Ritzelanschlag 211 umfasst einen Anschlagring und einen Sprengring. Die Ritzelwelle 202 steht mittels einer Überholkupplung 213 mit der Antriebswelle 44 in Wirkverbindung, so dass das Andrehritzel 22 mit einem Drehmoment von der Antriebswelle 44 angetrieben werden kann und im Überholfall beim Hochlauf der Verbrennungskraftmaschine eine Relativdrehzahl mit einer höheren Drehzahl des Andrehritzels 22 realisierbar ist.

In vorteilhafter Weise sind Lagerflächen am ersten Lagerabschnitt 206 der Antriebswelle 44 und/oder der Ritzelwelle 202 speziell gehärtet. Sie weisen eine Gleitbeschichtung auf. Aus fertigungstechnischen Gründen ist der Durchmesser über die Länge der Lagerabschnitte 206 und 207, auf denen das Andrehritzel 22 mit einem Ritzelschaft 204 lagert, im Wesentlichen konstant. Der Innendurchmesser des Ritzelschafts 204 ist im Bereich des zweiten Lagerabschnittes 207 mit der Lagerhülse 208 bis zum ersten Lagerabschnitt 206 mit einem deutlich größeren Innendurchmesser ausgebildet als die Bohrung von der Stirnseite am Andrehritzel 22 bis zum ersten Lagerabschnitt 206. Somit ergibt sich eine Ritzelwelle 202 aus dünneren Wandstärken mit einer deutlichen Gewichtsreduktion, die auch zu einer Ressourcenschonung des Werkstoffeinsatzes gegenüber einer Ritzelwelle gemäß des Standes der Technik beiträgt.

In vorteilhafter Weise ist eine frei ausstoßend gestaltete Startvorrichtung 10 somit sehr einfach zu montieren. Lediglich eine breite, dicke Lagerhülse 208 an einer Stirnseite, die dem Andrehritzel 22 gegenüberliegt, wird eingesetzt, und danach wird der Ritzelschaft 204 mit zumindest einem Lagerabschnitt direkt auf die Antriebswelle 44 lagernd geschoben.

Der Darstellung gemäß Figur 3 ist ein vergrößerter Ausschnitt im Querschnitt einer Ritzelwelle 202 in einer besonders bevorzugten Ausführungsform zu entnehmen.

Figur 3 zeigt den Ausschnitt mit dem Andrehritzel 22 im Bereich um den ersten Lagerabschnitt 206. Gemäß einer besonders bevorzugten Ausführungsform weist der Lagerabschnitt 206 der Ritzelwelle 202 eine umlaufende Schmiernut 214 auf. Die umlaufend ausgebildete Schmiernut 214 dient als Schmierstoffdepot, um den Lagerabschnitt 206 während der gesamten Lebensdauer mit ausreichend Schmierstoff zu versorgen. Der erste Lagerabschnitt 206 ist am Ritzelschaft 204 vor dem Andrehritzel 22 ausgebildet.

Das in den Figuren 2 und 3 dargestellte Andrehritzel 22 zeichnet sich dadurch aus, dass in dessen als Außenschrägverzahnung ausgebildeter Schrägverzahnung 143 entlang des gesamten Umfangs eine Festschmierstoffschicht 216 ausgebildet ist. Die Bindung der Festschmierstoffschicht 216 an die Oberfläche, d.h. eine Stirnseite 218 des Andrehritzels 22 bzw. an die Zahnflanken der Außenverzahnung 143 erfolgt über ein geeignetes Bindersystem, so z.B. Polyamidimid und Epoxid. Voraussetzung für eine gute Schichthaftung ist eine für die jeweilige Festschmierstoffschicht geeignete Festschmierstoffschicht 216 geeignete Oberflächenbehandlung so zum Beispiel Phosphortieren und Sandstrahlen und gegebenenfalls ein thermisches Verfahren so zum Beispiel das Einbrennen, welches zur Verbesserung der Schichteigenschaften dient.

Die Festschmierstoffschicht (216) umfasst insbesondere einen Schmierstoff, der hohe spezifische Flächenpressungen verträgt, wie z.B. MoS₂ und Graphit. In E-volventenverzahnungen der Schrägverzahnung 143 treten sehr hohe in Form einer Kontaktellipse verlaufende Flächenpressungen auf. Gegebenenfalls kann das Material der Festschmierstoffschicht 216 durch Stoffe ergänzt werden, die insbesondere die Haftreibung verringern, so z.B. Polytetrafluorethylen (PTFE). Eine Gleitlackschicht, in welcher die Festschmierstoffschicht 216 aufgetragen werden kann, wird zwar im Laufe des Gebrauchs abgetragen, jedoch entsteht eine idealglatt eingelaufene Oberfläche, so dass insbesondere adhäsiver Verschleiß, der die Oberflächen schädigt, vermieden werden kann.

In Weiterbildung des der Erfindung zugrunde liegenden Gedankens könnte auch der Zahnkranz 25 der Verbrennungskraftmaschine, der in dem Längsschnitt gemäß Figur 1 angedeutet ist, mit einer Feststoffschicht 216 beschichtet werden.

## Patentansprüche

1. Startvorrichtung (10) zum Andrehen einer Verbrennungskraftmaschine in einem Fahrzeug mit einer Ritzelwelle (202), die am vorderen Ende ein Andrehrizel (22) und am gegenüberliegenden Ende einen Ritzelschaft (204) aufweist, der auf einer Antriebswelle (44) der Startvorrichtung (10) verschiebbar geführt und gelagert ist und in einem Lager von einem Lagerschild (210) der Startvorrichtung (10) aufgenommen ist, **dadurch gekennzeichnet, dass** das Andrehritzel (22) im Bereich einer Verzahnung (143) und einer Stirnseite (218) mit einer Festschmierstoffschicht (216) versehen ist.

2. Startvorrichtung (10) gemäß Anspruch 1, **dadurch gekennzeichnet, dass** eine Außenschrägverzahnung (143) des Andrehritzel (22), insbesondere die Flanken der Verzahnung, mit der Festschmierstoffschicht (216) versehen ist.

3. Startvorrichtung (10) gemäß Anspruch 1, **dadurch gekennzeichnet, dass** die eine Stirnseite (218), die einem Zahnkranz (25) der Verbrennungskraftmaschine gegenüberliegende Stirnseite des Andrehritzels (22) ist.

4. Startvorrichtung (10) gemäß Anspruch 1, **dadurch gekennzeichnet, dass** eine Stirnseite, die dem Andrehritzel (22) der Startvorrichtung (10) zuweist, mit der Festschmierstoffschicht (216) versehen ist.

5. Startvorrichtung (10) gemäß Anspruch 1, **dadurch gekennzeichnet, dass** die Startvorrichtung eine frei ausstoßende Startvorrichtung oder eine Maul-Startvorrichtung ist.

6. Startvorrichtung (10) gemäß Anspruch 1, **dadurch gekennzeichnet, dass** die Festschmierstoffschicht (216) aus MoS₂ und/oder Graphit hergestellt ist und hohen spezifischen, in Form einer Kontaktellipse verlaufenden Flächenpressungen, standhält.

7. Startvorrichtung (10) gemäß Anspruch 1, **dadurch gekennzeichnet, dass** die Festschmierstoffschicht (216) die Haftreibung verringernde Zusätze, insbesondere PTFE, enthält.

8. Startvorrichtung (10) gemäß Anspruch 1, **dadurch gekennzeichnet, dass** der Zahnkranz (25) einer Verbrennungskraftmaschine mit einer Festschmierstoffschicht (216) versehen ist.

9. Startvorrichtung (10) gemäß Anspruch 1, **dadurch gekennzeichnet, dass** der Zahnkranz (25) einer Verbrennungskraftmaschine und das gesamte Andrehritzel (22) mit einer Festschmierstoffschicht (216) versehen sind.

## Claims

1. Starting apparatus (10) for starting an internal combustion engine in a vehicle having a pinion shaft (202) which has a starting pinion (22) at the front end and a pinion shank (204) at the opposite end, which pinion shank (204) is guided and mounted displaceably on a drive shaft (44) of the starting apparatus (10) and is received in a bearing by a bearing plate (210) of the starting apparatus (10), **characterized in that** the starting pinion (22) is provided with a solid lubricant layer (216) in the region of a toothing system (143) and an end side (218).

2. Starting apparatus (10) according to Claim 1, **characterized in that** an external helical toothing system (143) of the starting pinion (22), in particular the flanks of the toothing system, is provided with the solid lubricant layer (216).

3. Starting apparatus (10) according to Claim 1, **characterized in that** the one end side (218) is that end side of the starting pinion (22) which lies opposite a crown gear (25) of the internal combustion engine.

4. Starting apparatus (10) according to Claim 1, **characterized in that** an end side which points towards the starting pinion (22) of the starting apparatus (10) is provided with the solid lubricant layer (216).

5. Starting apparatus (10) according to Claim 1, **characterized in that** the starting apparatus is a freely ejecting starting apparatus or a nose-type starting apparatus.

6. Starting apparatus (10) according to Claim 1, **characterized in that** the solid lubricant layer (216) is produced from MoS₂ and/or graphite and withstands high specific surface pressures which run in the form of a contact ellipse.

7. Starting apparatus (10) according to Claim 1, **characterized in that** the solid lubricant layer (216) contains additives which reduce the adhesion friction, in particular PTFE.

8. Starting apparatus (10) according to Claim 1, **characterized in that** the crown gear (25) of an internal combustion engine is provided with a solid lubricant layer (216).

9. Starting apparatus (10) according to Claim 1, **characterized in that** the crown gear (25) of an internal combustion engine and the entire starting pinion (22) are provided with a solid lubricant layer (216).

## Revendications

1. Dispositif de démarrage (10) pour mettre en marche un moteur à combustion interne dans un véhicule, comprenant un arbre de pignon (202) qui comprend un pignon de démarrage (22) à l'extrémité avant et une queue de pignon (204) à l'extrémité opposée, laquelle queue de pignon est guidée et montée de manière coulissante sur un arbre d'entraînement (44) du dispositif de démarrage (10) et reçue dans un palier par un flasque de palier (210) du dispositif de démarrage (10), **caractérisé en ce que** le pignon de démarrage (22) est pourvu d'une couche de lubrifiant solide (216) dans la région d'une denture (143) et d'un côté frontal (218).

2. Dispositif de démarrage (10) selon la revendication 1, **caractérisé en ce qu'**une denture hélicoïdale extérieure (143) du pignon de démarrage (22), en particulier les flancs de la denture, est/sont pourvue/pourvus de la couche de lubrifiant solide (216).

3. Dispositif de démarrage (10) selon la revendication 1, **caractérisé en ce que** ledit côté frontal (218) est le côté frontal du pignon de démarrage (22) opposé à une couronne dentée (25) du moteur à combustion interne.

4. Dispositif de démarrage (10) selon la revendication 1, **caractérisé en ce qu'**un côté frontal qui est affecté au pignon de démarrage (22) du dispositif de démarrage (10) est pourvu de la couche de lubrifiant solide (216).

5. Dispositif de démarrage (10) selon la revendication 1, **caractérisé en ce que** le dispositif de démarrage est un dispositif de démarrage sortant librement ou un dispositif de démarrage à mâchoire.

6. Dispositif de démarrage (10) selon la revendication 1, **caractérisé en ce que** la couche de lubrifiant solide (216) est produite à partir de MoS₂ et/ou de graphite et résiste à des pressions de surface spécifiques élevées s'étendant sous la forme d'une ellipse de contact.

7. Dispositif de démarrage (10) selon la revendication 1, **caractérisé en ce que** la couche de lubrifiant solide (216) contient des additifs diminuant le frottement par adhérence, en particulier contient du PTFE.

8. Dispositif de démarrage (10) selon la revendication 1, **caractérisé en ce que** la couronne dentée (25) d'un moteur à combustion interne est pourvue d'une couche de lubrifiant solide (216).

9. Dispositif de démarrage (10) selon la revendication 1, **caractérisé en ce que** la couronne dentée (25) d'un moteur à combustion interne et la totalité du pignon de démarrage (22) sont pourvues d'une couche de lubrifiant solide (216).
